# EUROPÄISCHE PATENTANMELDUNG

(11) **EP 2 835 504 A1**
(43) Veröffentlichungstag der Anmeldung: **11.02.2015**
(21) Anmeldenummer: 13179889.4
(22) Anmeldetag: 09.08.2013
(51) Int. Cl.: F01D 11/08, F01D 11/14, F01D 25/28

(54) **Einsatzelement und Gasturbine**

(71) Anmelder: Siemens Aktiengesellschaft, 80333 München (DE)
(72) Erfinder: Ahmad, Fathi, 41564 Kaarst (DE); Händler, Michael, 40699 Erkrath (DE); Kampka, Kevin, 45478 Mülheim a. d. Ruhr (DE); Kowalski, Christian, 46147 Oberhausen (DE); Kowalzik, Christian, 45276 Essen (DE); Kurt, Nihal, 40231 Düsseldorf (DE); Schmitt, Stefan, 45481 Mülheim an der Ruhr (DE); Schröder, Peter, 45307 Essen (DE)

(57) **Zusammenfassung**

Die Erfindung betrifft Einsatzelement (14) zum Abdecken einer Aussparung (23) eines Ringsegments (13) einer Turbine (11) einer Gasturbine (10). Das Ringsegment (13) ist für einen Betrieb mit einer ein Deckband aufweisenden Laufschaufelreihe ausgebildet. Das Einsatzelement (14) eine konkav geformte Vorderseite (15) und eine Rückseite (16) mit einem Rückseitenprofil (17) auf. Dabei entspricht das Rückseitenprofil (17) im Wesentlichen der Negativform eines Aussparungsprofils (22) der Aussparung (23). Ferner wird eine Gasturbine (10) mit dem Einsatzelement (14) beansprucht.

## Beschreibung

Die vorliegende Erfindung betrifft ein Einsatzelement zur Befestigung an einem Ringsegment einer Turbine einer Gasturbine, welches für einen Betrieb mit einer ein Deckband aufweisenden Laufschaufelreihe ausgebildet ist. Zudem betrifft die vorliegende Erfindung eine Gasturbine.

Es ist bekannt und weit verbreitet, dass Laufschaufelreihen von Turbinen von Gasturbinen am oberen Ende der Schaufelblätter ein sogenanntes Deckband aufweisen.

Durch das Deckband ist es bei Eingriffen an der Laufschaufelreihe, die beispielsweise zu Instandhaltungs- oder Erprobungszwecken erfolgen, notwendig, ein sogenanntes Cover-Lift, also ein Abheben des kompletten oberen Gehäuseteils, vorzunehmen, um Ringsegmente, die um die Laufschaufel herum angeordnet sind, auszutauschen. Ein Cover-Lift ist mit großem Aufwand verbunden.

Der vorliegenden Erfindung liegt die Aufgabe zugrunde, diese Nachteile zu beheben und ein Einsatzelement bereitzustellen, mit dem es möglich ist, eine Laufschaufelreihe ohne Deckband in der Gasturbine zu betreiben.

Gelöst wird diese Aufgabe mit einem Einsatzelement nach Anspruch 1 sowie einer Gasturbine nach Anspruch 6. Vorteilhafte Weiterbildungen der Erfindung sind in den Unteransprüchen angegeben und in der Beschreibung beschrieben.

Das erfindungsgemäße Einsatzelement zum Abdecken einer Aussparung eines Ringsegments einer Turbine einer Gasturbine weist eine konkav geformte Vorderseite und eine Rückseite mit einem Rückseitenprofil auf. Das Rückseitenprofil entspricht im Wesentlichen der Negativform eines Aussparungsprofils der Aussparung des Ringsegments. Das Ringsegment ist für einen Betrieb mit einer ein Deckband aufweisenden Laufschaufelreihe ausgebildet.

Mit dieser Anordnung ist es vorteilhaft ermöglicht eine Gasturbine von einem Betrieb mit einer Laufschaufelreihe mit Deckband auf einen Betrieb mit einer Laufschaufelreihe ohne Deckband umzurüsten ohne dafür neue Ringsegmente einsetzen zu müssen. Ein aufwendiger Cover-Lift bleibt dadurch erspart. Auch eine aufwendige Neuanfertigung passender Ringsegmente kann erspart bleiben.

Dadurch, dass das Rückseitenprofil im Wesentlichen der Negativform des Aussparungsprofils entspricht, kann das Einsatzelement einfach, schnell und genau an dem Ringsegment positioniert werden, bevor es befestigt wird. Die Montage des Einsatzelements ist dadurch vereinfacht und mit weniger Aufwand möglich.

In einer vorteilhaften Ausgestaltung des erfindungsgemäßen Einsatzelements weist das Einsatzelement zumindest einen von der Vorderseite zur Rückseite verlaufenden Kanal auf.

Damit kann das Einsatzelement mit zumindest einem entsprechenden Befestigungsmittel, wie einer Schraube oder einem Bolzen, in einfacher Weise an dem Ringsegment befestigt werden.

In einer weiteren vorteilhaften Ausgestaltung des erfindungsgemäßen Einsatzelements weist das Einsatzelement zumindest eine koaxial zum Kanal angeordnete Senkung an der Vorderseite auf.

Das Befestigungsmittel zur Befestigung des Einsatzelements, insbesondere der Kopf einer Schraube, kann in der Senkung angeordnet sein um nicht aus der Kontur des Eisatzelements herauszustehen.

In einer weiteren vorteilhaften Ausgestaltung des erfindungsgemäßen Einsatzelements weist der Kanal eine Ausbuchtung auf. Die Ausbuchtung ist im Gegensatz zur Senkung nicht an der Vorderseite des Einsatzelements angeordnet, sondern im Inneren des Einsatzelements. Die Querschnittsfläche des Kanals ist dadurch an der Vorderseite und an der Rückseite kleiner als im Bereich der Ausbuchtung.

Bolzen beziehungsweise Schrauben zur Montage des Einsatzelements können von der Seite zugeführt werden. Ihre Köpfe stehen nicht aus der Kontur des Einsatzelements heraus. In Richtung der Vorderseite kann ein Formschluss zwischen Bolzen und Einsatzelement hergestellt werden, was insbesondere bei einer Überkopfmontage ein Herausrutschen des Bolzens verhindert. Die Montage des Einsatzelements an dem Ringsegment ist dadurch vereinfacht.

In einer weiteren vorteilhaften Ausgestaltung des erfindungsgemäßen Einsatzelements ist im Kanal ein Bolzen angeordnet, der einen in die Ausbuchtung ragenden Kopf aufweist.

Damit ist der Bolzen formschlüssig in dem Einsatzelement angeordnet. Bei der Montage des Einsatzelements am Ringsegment braucht der Bolzen nicht extra zugeführt und positioniert werden. Die Montage ist dadurch weiter vereinfacht.

Das erfindungsgemäße Einsatzelement ist bevorzugt in eine Gasturbine integriert. Die erfindungsgemäße Gasturbine umfasst eine Turbine mit einer Laufschaufelreihe und einem um die Laufschaufelreihe herum angeordneten Ring aus mehreren Ringsegmenten. Die Ringsegmente sind für einen Betrieb mit einer ein Deckband aufweisenden Laufschaufelreihe ausgebildet. Das zumindest eine Einsatzelement ist an einem der Ringsegmente befestigt.

Damit ist vorteilhaft eine Gasturbine bereitgestellt, die für einen Betrieb mit einer Laufschaufelreihe ohne Deckband geeignet ist. Bei einem Austausch der Laufschaufeln braucht nicht das obere Gehäuse der Gasturbine abgehoben zu werden (Cover-Lift). Ein Zugang von der Auslassseite her genügt. Die erfindungsgemäße Gasturbine eignet sich damit insbesondere für Versuchszwecke, bei denen häufiger Änderungen an den Schaufelblättern vorgenommen werden. Mit der vorliegenden Gasturbine könne diese Versuche erheblich schneller aufgebaut und durchgeführt werden.

Zudem kann die erfindungsgemäße Gasturbine in einfacher Weise für den Betrieb mit einer Laufschaufelreihe mit Deckband umgerüstet werden, indem das zumindest eine Einsatzelement vom Ringsegment entfernt wird.

Ausführungsbeispiele der Erfindung werden anhand der Zeichnungen und der nachfolgenden Beschreibung näher erläutert. Es zeigen:
- Figur 1: eine erfindungsgemäße Gasturbine,
- Figur 2: eine Detailansicht der Gasturbine,
- Figur 3: ein erfindungsgemäßes Einsatzelement und
- Figur 4: das erfindungsgemäße Einsatzelement in einer weiteren Ausgestaltung.

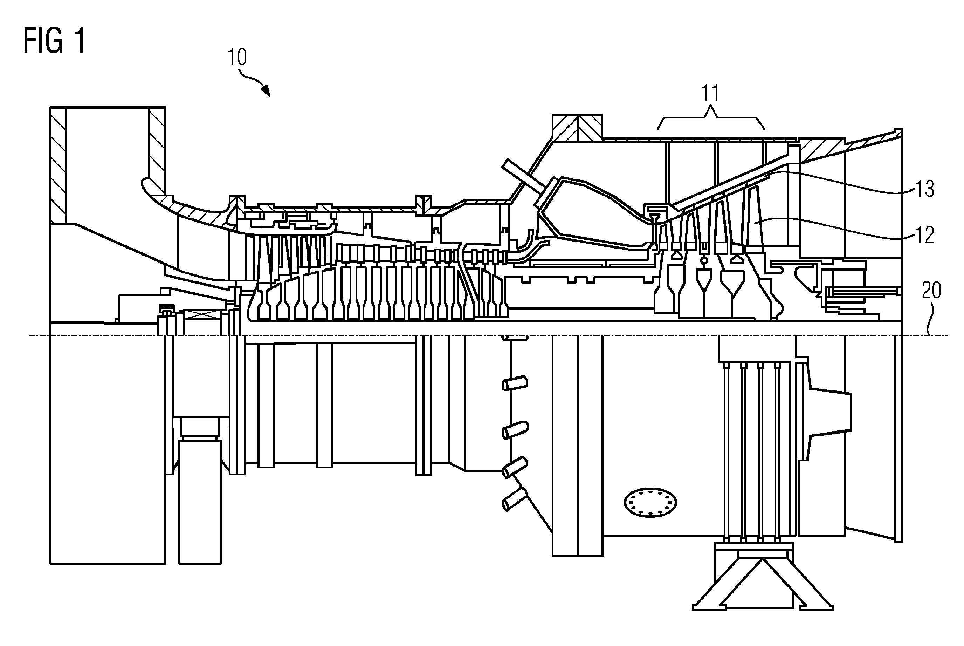

In der Figur 1 ist eine erfindungsgemäße Gasturbine 10 in einer beispielhaften Ausgestaltung skizziert. Die Gasturbine 10 umfasst erfindungsgemäß eine Turbine 11 in der wenigstens eine Laufschaufelreihe 12 angeordnet ist. Um diese Laufschaufelreihe 12 herum ist erfindungsgemäß ein Ring aus mehreren Ringsegmenten 13 angeordnet. Die Laufschaufelreihe 12 ist um eine Rotationsachse 20 drehbar angeordnet.

Bei der Laufschaufelreihe 12 handelt es sich insbesondere um die stromabwärts der anderen Laufschaufelreihen gelegene. In der Figur 1 ist die entsprechende Laufschaufelreihe 12 die vierte Laufschaufelreihe der Turbine 11 der Gasturbine 10.

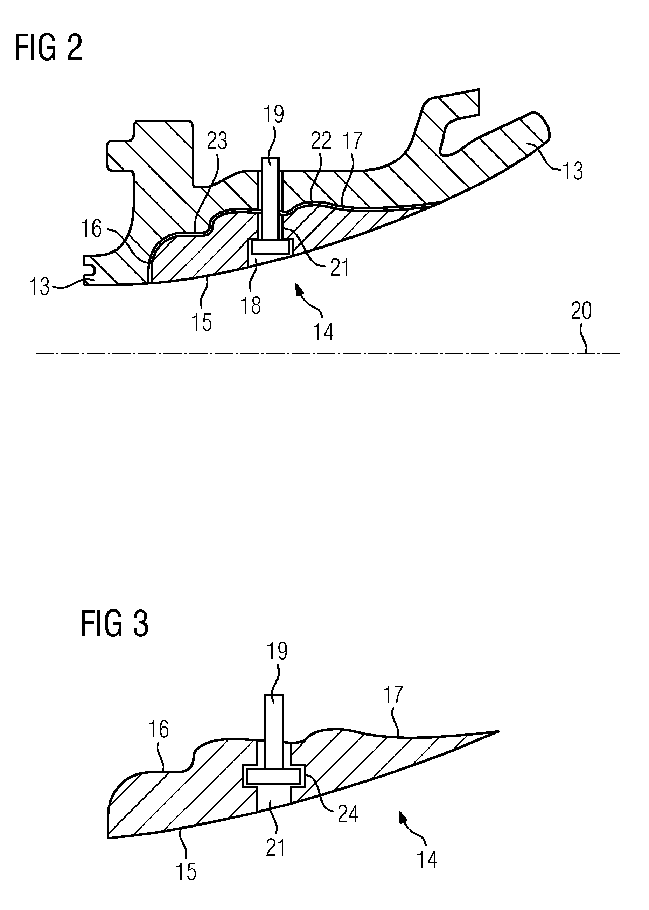

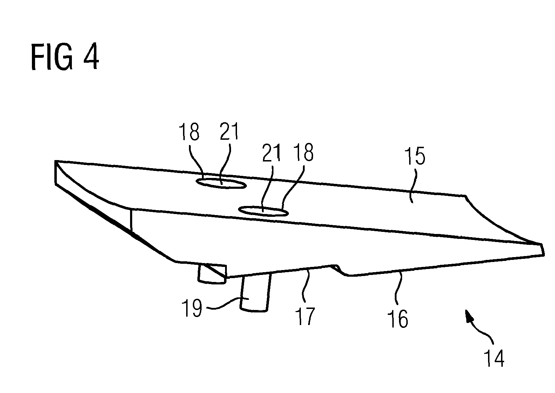

Die erfindungsgemäße Gasturbine 10 weist wenigstens ein an einem der Ringsegmente 13 befestigtes Einsatzelement 14 auf. In der Figur 2 ist die Anordnung des Einsatzelements 14 in dem Ringsegment 13 in einer beispielhaften Ausgestaltung in einer Schnittdarstellung skizziert. In der Figur 3 ist das Einsatzelements 14 einer weiteren beispielhaften Ausgestaltung in einer Schnittdarstellung skizziert. In der Figur 4 ist das Einsatzelement 14 in einer Einzeldarstellung gezeigt.

Das erfindungsgemäße Einsatzelement 14 ist ausgebildet, eine Aussparung 23 in dem Ringsegment 13 ab. Diese Aussparung 23 besitzt das Ringsegment 13 für den Betrieb der Gasturbine 10 mit einer Laufschaufelreihe, die ein Deckband aufweist. Um beispielsweise in einer Erprobungsphase nicht die gesamte obere Gehäusehälfte der Gasturbine abnehmen zu müssen (Cover-Lift) ist es vorteilhaft, die Laufschaufelreihe 12 ohne Deckband zu verwenden. Mittels des erfindungsgemäßen Einsatzelements 14 kann das Ringsegment 13 an die Laufschaufelreihe 12, die kein Deckband aufweist, angepasst werden.

Das Einsatzelement 14 weist erfindungsgemäß eine Rückseite 16 und eine konkav geformte Vorderseite 15 auf. Die Rückseite 16 weist erfindungsgemäß ein Rückseitenprofil 17 auf. Dieses Rückseitenprofil 17 entspricht im Wesentlichen der Negativform eines Aussparungsprofils 22 der Aussparung 23. In der Figur 2 gezeigten Ausgestaltung füllt das Einsatzelement 14 die Aussparung nahezu komplett aus. Das Einsatzelement 14 ist insbesondere derart gestaltet, dass es das Ringsegment 13 in zumindest drei Punkten berührt. Bei einer Montage ist dadurch eine sichere und schnelle Positionierung ermöglicht.

Das Einsatzelement 14 weist bevorzugt zumindest einen von der Vorderseite 15 zur Rückseite 16 verlaufenden Kanal 21 auf. Der Kanal 21 dienen der Befestigung des Einsatzelements 14 an dem Ringsegment 13. Mittel zum Befestigen des Einsatzelements 14 werden dabei durch die Kanäle 21 geführt. In den Figuren 3 bis 4 sind Bolzen 19 als Befestigungsmittel gezeigt. Die Bolzen 19 sind insbesondere Gewindebolzen oder Schrauben. Das Einsatzelement 14 ist in montiertem Zustand fest mit dem Ringsegment 13 verbunden. Das Einsatzelement 14 schließt im montierten Zustand bevorzugt bündig mit dem Ringsegment 13 ab.

Die Vorderseite 15 des erfindungsgemäßen Einsatzelements 14 ist konkav ausgeführt und damit den um die Laufschaufelreihe 12 herum angeordneten Ringsegmenten 13 angepasst. Im montierten Zustand ist die konkave Krümmung der Vorderseite 15 quer zur Rotationsachse 20 ausgebildet.

Das Einsatzelement 14 kann eine koaxial zum Kanal 21 angeordnete Senkung 18 an der Vorderseite 15 aufweisen. In einer solchen Ausgestaltung ist das Einsatzelement 14 in der Figur 2 gezeigt. Der Bolzen 19 zur Befestigung des Einsatzelements 14, insbesondere der Kopf einer Schraube, kann in der Senkung 18 angeordnet sein um nicht aus der Kontur des Eisatzelements 14 herauszustehen.

Es ist erfindungsgemäß auch möglich, dass der Kanal 21 des Einsatzelements 14 eine Ausbuchtung 24 aufweist. In einer solchen Ausgestaltung ist das Einsatzelement 14 in der Figur 3 gezeigt. Die Ausbuchtung 24 ist insbesondere koaxial zum Kanal 12 angeordnet. Im Unterschied zur Senkung 18 ist die Ausbuchtung 24 nicht an der Vorderseite 15, sondern im Inneren des Einsatzelements 14 angeordnet. An der Vorderseite 15 und an der Rückseite 16 weist der Kanal 21 dabei jeweils eine Querschnittsfläche auf, die kleiner ist als die Querschnittsfläche des Kanals 21 innerhalb der Ausbuchtung 24. Der von der Vorderseite 15 bis zur Ausbuchtung 24 reichende Abschnitt des Kanals 21 dient dann beispielsweise dem Einführen eines Werkzeugs zum Drehen des Bolzens 19 bei der Montage.

Der Bolzen 19 kann erfindungsgemäß Bestandteil des Einsatzelements 14 sein und in der Weise im Kanal 21 angeordnet, dass sein Kopf in die Ausbuchtung 24 ragt. Der Bolzen 19 ist dadurch formschlüssig im Kanal 21 angeordnet und kann weder zur Vorderseite 15 noch zur Rückseite 16 hin aus dem Kanal 21 heraus bewegt werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Einsatzelement (14) zum Abdecken einer Aussparung (23) eines Ringsegments (13) einer Turbine (11) einer Gasturbine (10), welches für einen Betrieb mit einer ein Deckband aufweisenden Laufschaufelreihe ausgebildet ist,
wobei das Einsatzelement (14) eine konkav geformte Vorderseite (15) und eine Rückseite (16) mit einem Rückseitenprofil (17) aufweist und das Rückseitenprofil (17) im Wesentlichen der Negativform eines Aussparungsprofils (22) der Aussparung (23) entspricht.

2. Einsatzelement (14) nach Anspruch 1,
wobei das Einsatzelement (14) zumindest einen von der Vorderseite (15) zur Rückseite (16) verlaufenden Kanal (21) aufweist.

3. Einsatzelement (14) nach Anspruch 2,
wobei das Einsatzelement (14) zumindest eine koaxial zum Kanal (21) angeordnete Senkung (18) an der Vorderseite (15) aufweist.

4. Einsatzelement (14) nach Anspruch 2,
wobei der Kanal (21) eine Ausbuchtung (24) aufweist.

5. Einsatzelement (14) nach Anspruch 4,
wobei im Kanal (21) ein Bolzen (19) angeordnet ist, der einen in die Ausbuchtung ragenden Kopf aufweist.

6. Gasturbine (10) mit einer eine Laufschaufelreihe (12) und einen um die Laufschaufelreihe (12) herum angeordneten aus mehreren Ringsegmenten (13) aufgebauten Ring aufweisenden Turbine (11),
wobei die Ringsegmente (13) für einen Betrieb mit einer ein Deckband aufweisenden Laufschaufelreihe ausgebildet sind, wobei die Gasturbine (10) zumindest ein an einem der Ringsegmente (13) befestigtes Einsatzelement (14) nach einem der Ansprüche 1 bis 5 aufweist.
